# EUROPÄISCHE PATENTANMELDUNG

(11) **EP 3 453 921 A1**
(43) Veröffentlichungstag der Anmeldung: **13.03.2019**
(21) Anmeldenummer: 17001508.5
(22) Anmeldetag: 07.09.2017
(51) Int. Cl.: F16H 48/28

(54) **DIFFERENZIAL MIT EINSTELLBARER SPERRWIRKUNG**

(71) Anmelder: Markus Michelberger & Sascha Schweibl GbR, 87493 Lauben (DE)
(72) Erfinder: Schweibl, Sascha, 87493 Lauben (DE); Budulig, Flavio, 73614 Schorndorf (DE); Michelberger, Markus, 87487 Wiggensbach (DE)

(57) **Zusammenfassung**

Die Erfindung betrifft Kegelrad-Differenziale als Achs- oder Zentraldifferenziale für Fahrzeuge, insbesondere Modellsport- oder Renn-Fahrzeuge, bei denen das Antriebsmoment über ein mit einem Kegelrad-Getriebe verbundenes Antriebsgehäuse übertragen wird und bei dem eine begrenzte Sperrwirkung auf die Abtriebsachsen durch statisch oder/und dynamisch erzeugte Friktionsmomente in Reibscheiben-Konstellationen erreicht wird.

Es besteht die Aufgabe, ein von außen schnell verstellbares Kegelrad-Differenzial zu schaffen, das durch Aktivieren und Deaktivieren von Reibscheiben-Paarungen unterschiedliche Friktionsmoment-Stufen schalten kann. Diese Aufgabe wird dadurch erfüllt, dass die Reibscheiben-Konstellationen (4) jeweils aus einer oder mehreren Reibscheibenpaarungen (5) mit jeweils mindestens einer außen-fixierbaren Scheibe (6) und einer innen-fixierten Scheibe (7) bestehen, bei denen die jeweils außen-fixierbare(n) Scheibe(n) (6) an ihrem Umfang Mulden-artige Einbuchtungen (8) besitzen, wobei eine oder mehrere im Antriebsgehäuse (3) verankerte Rotationsachsen-parallele dreh- oder verschiebbare Schaltwellen (9) bestehen, welche entweder durch die Mulden-artigen Einbuchtungen (8) der außen-fixierbaren Scheibe(n) (6) hindurch verlaufen und jeweils an deren axialer Position eine sektorale Aussparung (10, 11) mit einem verbliebenen Querschnitt (15) der Schaltwelle (9) besitzen, oder welche außerhalb des Umfangs der außen fixierbaren Scheiben (6) verlaufen und jeweils im Bereich der Mulden-artigen Einbuchtungen (8) eine oder mehrere Erhebungen (19, 20) besitzen. Werden durch Betätigen einer Schaltwelle (9) ein oder mehrere verbliebene Querschnitte (15) oder Erhebungen (19, 20) in entsprechende Mulden-artige Einbuchtung (8) außen-fixierbarer Scheiben (6) bewegt, können so eine oder parallel mehrere außen-fixierbare Scheiben (6) gegenüber den innen-fixierten Scheiben (7) blockiert werden. Ein erfindungsgemäßer Drehmechanismus (12) oder Schubmechanismus besitzt bei mehreren, um die außen-fixierbaren Scheiben (6) herum angeordneten Schaltwellen (9) ein Koppelelement (14), mit dem deren gleich-winklig parallele Verdrehung oder deren gleicher Vorschubweg bewirkt wird.

## Beschreibung

Die vorliegende Erfindung betrifft Differenzial-Getriebe, im Besonderen Kegelrad-Differenziale, als Achs- oder Zentraldifferenzial für die Anwendung bei Elektro- oder Verbrennungsmotor- oder Hybrid-betriebenen Fahrzeugen. Dabei bezieht sich die Erfindung auf solche Differenziale, bei denen das Antriebsmoment über ein mit einem zentralen Kegelrad-Getriebe verbundenes Antriebsgehäuse übertragen wird und bei denen eine begrenzte oder völlige Sperrwirkung auf die Antriebsachs-parallelen oder Antriebsachsorthogonalen Abtriebsachsen durch statisch mittels Feder- oder Klemmkräften oder/und dynamisch mittels Rampen-Konstruktionen erzeugte Friktionsmomente in koaxialen, einseitig oder beidseitig des zentralen Kegelradgetriebes befindlichen Reibscheiben-Konstellationen ausgeübt wird, wobei eine Veränderbarkeit oder Einstellbarkeit der Sperrwirkung durch Veränderungen in der Reibscheiben-Konstellation vorgesehen ist. Es besteht der Bedarf, insbesondere auch bei Modellsport- oder Rennfahrzeugen, dass die gewünschte Einstellung der Sperrwirkung durch Veränderungen in der Reibscheiben-Konstellation ohne großen Zeit- und Arbeits-Aufwand, insbesondere ohne Öffnen oder Zerlegen des Differenzials, möglich wird.

Bei Differenzialen mit begrenztem Sperrmoment, insbesondere auch für den Einsatz bei Modellsport- oder Rennfahrzeugen, setzt sich das Gesamtsperrmoment im Betrieb typischerweise aus einer durch Vorspann-Kräfte erzeugten statischen Grundsperrung (Preload genannt) und dynamisch durch aus dem Antriebsmoment, zum Beispiel mittels Andruck-Rampen, erzeugten dynamischen Sperrmomenten zusammen. Die Variabilität des sogenannten Sperrwirkungsgrades, also der Relation von Eingangs- zu Ausgangsmoment, ergibt sich demnach hauptsächlich aus dem Momenten-gesteuerten Anteil. Mit der Variation der Friktionsmomente in Reibscheiben-Konstellationen kann somit in erheblichem Umfang Einfluss auf die Sperrwirkung eines entsprechenden Differenzials genommen werden.

Es sind Lösungen bekannt, bei denen die manuelle Einstellbarkeit durch Veränderung der statischen Vorspannkraft auf Friktionsscheiben erfolgen soll (IT000001304644B und ITMO0000980198A, Produktbeschreibung unter http://www.bergonzoni.it/it/download/ depliant/modularVLS2014_ita.pdf, Stand Juli 2017).
Die Einflussnahme auf die Sperrwirkung und das Ansprechverhalten ist dabei jedoch nur auf die statische Grundsperrung begrenzt, da die eingesetzten Reibscheiben-Konstellation und die Rampenwinkel fix sind. Außerdem wird die Sperrwirkung auf beide Abtriebsachsen gleichermaßen ausgeübt, so dass eine individuelle Einstellung jeder einzelnen Abtriebsachse nicht möglich ist. Die axiale Abstützung der Vorspannkräfte belastet zudem die eingebauten Wellenlager, die entsprechend ausgelegt werden müssen.

Eine andere Konstruktion (CN000102380214A, CN000201768372U, TW000201208751A) verwendet beidseitig eines Kegelrad-Getriebes befindliche Bremsringe, durch deren exzentrische Bohrung in Stufen veränderbare radiale Druckkräfte auf eine korrespondierende orbitale Bremsfläche und damit entsprechende Friktionsmomente auf die Abtriebsachsen aufgebracht werden. Durch einen Betätigungs- und Koppelmechanismus können beide Bremsringe synchron von außen verstellt werden. Nachteilig sind hierbei zum einen die aufwändige Konstruktion und zum anderen die erhöhte und permanent einseitig wirkende Radialkraft auf die betroffenen Wellenlager. Mit der Einstellung der Vorspannung der Bremsringe ist die Einflussnahme auch hier nur auf die statische Grundsperrung begrenzt.

Bekannte Ausführungen von Differenzialgetrieben mit begrenzter Sperrwirkung, sogenannte "Limited Slip Differentials" (zum Beispiel: http://www.rs5-modelsport.com/index.php?option =com_content &view =article&id= 248&Itemid=75 , Stand 07/2017), weisen gebräuchliche Bremsscheiben-Paarungen auf, die durch dynamisch erzeugte axiale Kräfte aus dem Kegelrad-Getriebe heraus oder/und durch statisch erzeugte Vorspann-Elemente je nach den eingesetzten Materialien der Reibpaarungen unterschiedliche Sperrwirkung erzeugen. Die dynamisch erzeugten axialen Kräfte werden durch eine Rampen-Konstruktion zwischen den Korbhälften des zentralen Kegel-Getriebes erzeugt. Um die Sperrwirkung zu verändern, müssen allerdings Bremsscheiben-Paarungen aus- oder eingebaut oder gewechselt werden. Dies hat den Nachteil, dass das Differenzial demontiert und geöffnet werden muss. Ähnlich aufwändig umzustellen ist eine bekannte Lösung, bei der die Sperrwirkung durch Wechsel des Schmiermittels veränderbar sein soll (http://www.t2m-rc.fr/de/, Stand 07/2017).

Es ist ferner eine Lösung bekannt, bei der neben der Varianz der Bremsscheiben-Paarungen eine weitere Einstellmöglichkeit durch die Wahl einer von mehreren bestehenden Spreizrampen mit jeweils unterschiedlichem Spreizrampen-Winkel besteht (http://www.the-racing-shop.de/shop/product_info.php?info=p2484_Lightscale-STD-Differential.html& XTCsid=7a503552a10a0f558521d55f8fd8d970, Stand 07/2017). Damit ist der Antriebsmoment-abhängige Aufbau unterschiedlicher Sperrwirkungs-Kennlinien möglich (http://www.the-racing-shop.de/shop/product_info.php?info=p2484_Lightscale-STD-Differential.html&XTCsid=7a503552a10a0f558521d55f8fd8d970). Aber auch diese Konstruktion verlangt den Ausbau des Differenzials und dessen um 180° gewendeten Wiedereinbau oder die zumindest teilweise Zerlegung des Differenzials.

Es besteht daher die Aufgabe, die Nachteile der bestehenden Lösungen zu überwinden und ein von außen schnell verstellbares Kegelrad-Differenzial zu schaffen, das durch die Pluralität von Möglichkeiten des Aktivierens und Deaktivierens von Reibscheiben-Paarungen ein- oder beidseitig eines zentralen Kegelrad-Getriebes verschiedene, symmetrisch oder auch asymmetrisch auf die Abtriebsachsen wirkende Friktionsmoment-Stufen und damit Sperrwirkungs-Bereiche sowie Ansprech-Verhaltensweisen bieten kann, um damit ein zur Anwendung des Fahrzeugs passendes Traktions-Verhalten zu erzielen. Diese Aufgabe wird durch die in Anspruch 1 beschriebene Erfindung erfüllt. Bevorzugte Weiterbildungen der Erfindung sind in den Ansprüchen 2 bis 10 dargestellt.

Ein erfindungsgemäßes Kegelrad-Differenzial besitzt einseitig oder beidseitig eines zentralen Kegelrad-Getriebes Reibscheiben-Konstellationen, die jeweils aus einer oder mehreren Reibscheibenpaarungen mit jeweils mindestens einer außen-fixierbaren Scheibe und einer innen-fixierten Scheibe bestehen. Die Reibscheibenpaarungen können aus unterschiedlichsten Material-Kombinationen bestehen. Die sich aus statischen und dynamischen Anteilen zusammensetzenden Sperrmomente lassen sich wirkungsvoll und in weitem Bereich durch die von der Materialwahl abhängigen Reibkoeffizienten und die Anzahl aktiver Reibflächen in Reibscheiben-Konstellationen einstellen. Eine außen-fixierbare Scheibe besitzt, je nach Lage und Reibscheiben-Konstellation, entweder eine oder zwei benachbarte innen fixierte Scheiben. Eine Reibscheibenpaarung wird also als Wirkverbindung von einer außen-fixierbaren und einer oder zwei innen fixierten Scheiben verstanden. Wird eine außen-fixierbare Scheibe blockiert, so werden dementsprechend entweder eine oder zwei Reibflächen aktiviert, und dies schafft ein dementsprechend höheres Sperrmoment. Um das Aktivieren und Deaktivieren von Reibflächen durch eine einfach zu bedienende Schaltvorrichtung vornehmen zu können, ist ein wesentlicher Bestandteil der Erfindung daher, dass bei jeder Reibscheibenpaarung die jeweils außen-fixierbare(n) Scheibe(n) an ihrem Umfang Mulden-artige Einbuchtungen besitzen und dass eine oder mehrere im Antriebsgehäuse verankerte Rotationsachsen-parallele dreh- oder verschiebbare Schaltwellen bestehen, welche entweder durch die Mulden-artigen Einbuchtungen der außen-fixierbaren Scheibe(n) hindurch verlaufen und jeweils im Bereich der Mulden-artigen Einbuchtungen eine sektorale Aussparung mit einem verbliebenen Querschnitt der Schaltwelle besitzen, oder welche außerhalb des Umfangs der außen fixierbaren Scheiben verlaufen und jeweils im Bereich der Mulden-artigen Einbuchtungen eine oder mehrere Erhebungen besitzen. Die Größe, Form und Winkellage der sektoralen Aussparungen oder Erhebungen sind erfindungsgemäß so gestaltet, dass je nach Drehwinkel oder Schubstellung der Schaltwelle(n) keine, eine oder parallel mehrere außen-fixierbare Scheiben gegenüber den innen-fixierten Scheiben in diesem Bereich blockiert sind. Die Schaltwelle(n) wird/werden durch einen Drehmechanismus oder einen Schubmechanismus in die gewünschte Schaltstellung gebracht und dort durch eine Fixiereinrichtung gesichert. Dieser Drehmechanismus kann im Inneren oder außerhalb eines Antriebsgehäuses angeordnet sein. Im Falle mehrerer, um die außen-fixierbaren Scheiben herum angeordneten Schaltwellen wird vorgeschlagen, dass die gleich-winklig parallele Verdrehung oder deren gleicher Vorschubweg durch ein Koppelelement realisiert wird, im Falle der drehend betätigten Schaltwellen zum Beispiel durch ein zentrales Zahnrad oder einen Zahnriemen im Zusammenwirken mit entsprechenden Zahnrädern auf den Schaltwellen. Die gewünschte Schaltstellung wird manuell oder mit Hilfe eines technischen Mittels durch Betätigung einer außerhalb des Antriebsgehäuses befindlichen oder von dessen Inneren nach außen geführten Betätigungseinrichtung erreicht. Die Fixierung einer Schaltstellung erfolgt mit an sich vorbekannten technischen Mitteln, zum Beispiel Endanschlägen am Dreh- oder Schubmechanismus, elastisch vorgespannten Rast-Elementen oder/und einem oder mehreren kraft- oder formschlüssig wirkenden Steck-, Klemm- oder Schraub-Elementen.

Die Erfindung mit bevorzugten Weiterbildungen wird nachstehend unter Einbeziehung folgender Abbildungen beschrieben:
- Fig. 1:: Kegelrad-Differenzial, Gesamtansicht
- Fig. 2:: Kegelrad-Differenzial, Schnittdarstellung gesamt
- Fig. 3:: Schaltmechanismus
- Fig. 4:: Kegelrad-Getriebe und Schaltwellen
- Fig. 5:: Reibscheiben-Konstellationen
- Fig. 6:: Außen-fixierbare Scheiben
- Fig. 7:: Profile von sektoralen Aussparungen
- Fig. 8:: Blockierung durch Erhebungen
- Fig. 9:: Druckkraft-Übertragung auf außen-fixierbare Scheiben
- Fig. 10:: Beispiel zu Schaltstufen
- Fig. 11:: Drehmechanismus
- Fig. 12:: Betätigungsmechanismus und Fixiereinrichtung

Die in den Zeichnungen eingetragenen Bezugszeichen sind in der separat beigefügten Bezugszeichenliste den entsprechenden Begriffen zugeordnet.

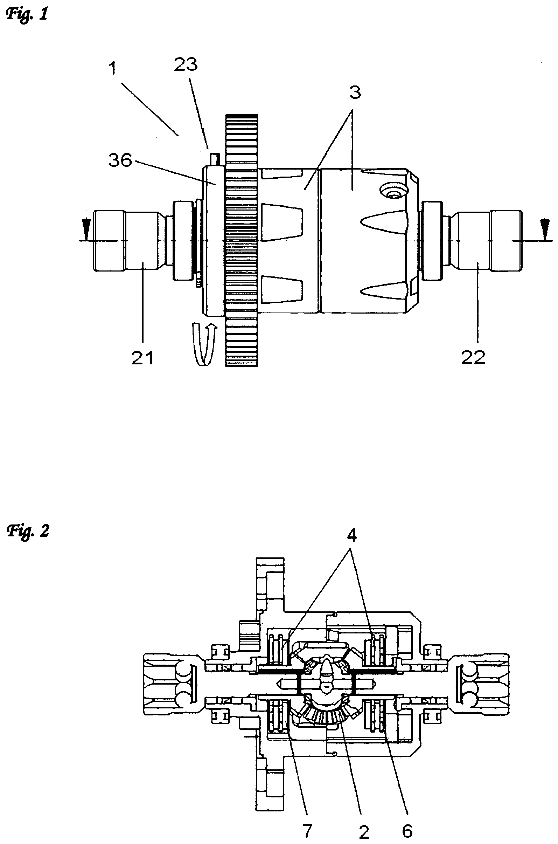

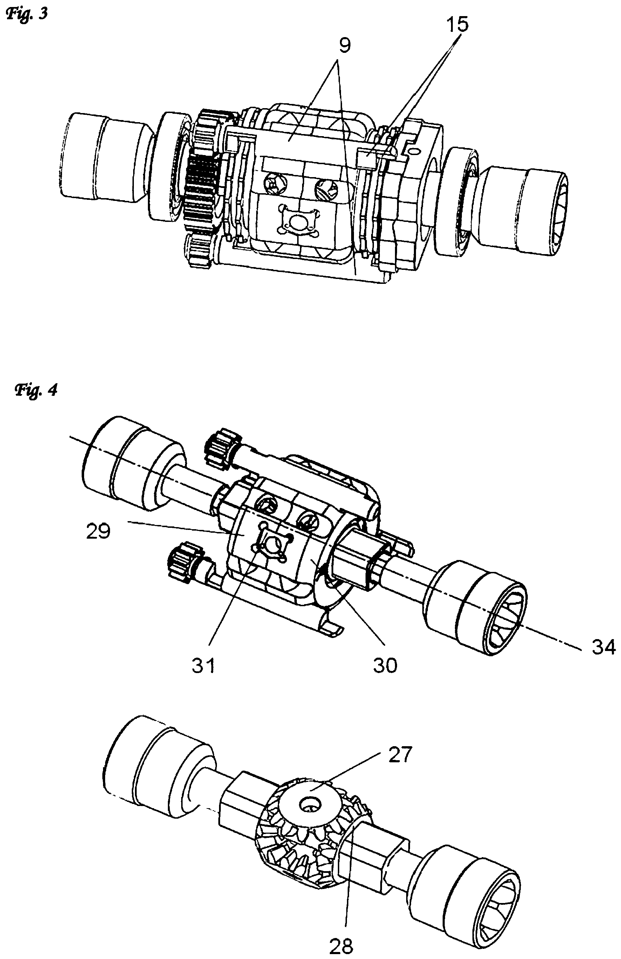

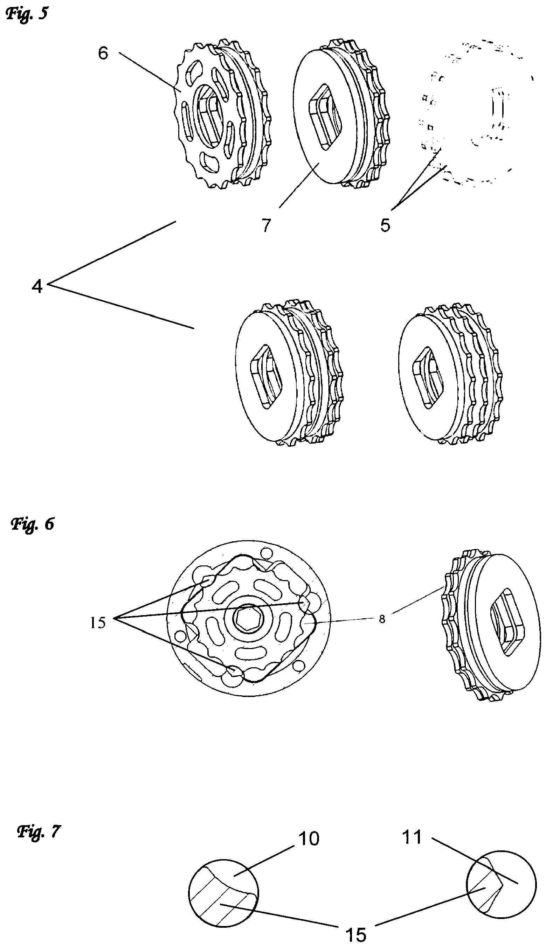

In den Figuren 1 bis 12 wird die vorliegende Erfindung anhand von Ausführungsbeispielen und konstruktiven Ausprägungen beschrieben. Die Erfindung ist vorgesehen für Kegelrad-Differenziale (1), die zu den Sperrdifferenzialen mit begrenztem Sperrmoment zählen. In deren Zentrum befindet sich ein Kegelrad-Getriebe (2), welches das Antriebsmoment aus Elektro- oder Verbrennungsmotor- oder Hybrid-Antrieben auf zwei Abtriebsachsen (21, 22) Streckenverlaufs- und Traktions-abhängig verteilt. In Fig. 1 ist ein erfindungsgemäß ausgestattetes beispielhaftes Kegelrad-Differenzial (1) dargestellt, bei dem das Kegelrad-Getriebe (2) in ein drehbar gelagertes Antriebsgehäuse (3) eingebaut ist. An diesem ist ein Antriebszahnrad (29) angebracht, über welches das Antriebsmoment auf das Kegelrad-Getriebe (2) übertragen wird. Wie in Fig. 4 zu sehen ist, sind die umlaufenden und die mit den Abtriebsachsen (21, 22) verbundenen Kegelzahnräder (27, 28) durch zwei mit dem Antriebsgehäuse (3) verbundene Korbhälften (29, 30) gefasst. Bei der Übertragung eines anliegenden Antriebsmoments auf die Achsen der umlaufenden Kegelzahnräder (27) bewirken zwischen den Korbhälften (29, 30) auf den Achs-Enden der umlaufenden Kegelzahnräder (27) angeordnete Rampen-Steine (31) beispielhaft den Aufbau dynamischer Druckkräfte auf die beidseitig des Kegelrad-Getriebes (2) befindlichen Reibscheiben-Konstellationen (4). In Fig. 5 sind beispielhaft Reibscheiben-Konstellationen mit unterschiedlicher Anzahl und Anordnung von innen fixierten Scheiben (7) und außen-fixierbaren Scheiben (6) dargestellt. Mit der auf diesen durch einen Preload-Mechanismus erzeugten statischen Vorspann-Kräften und den genannten dynamischen Druckkräften werden die auf die Abtriebsachsen (21, 22) wirkenden Sperrmomente erzeugt. Erfindungsgemäß wird die schnelle und wirkungsvolle Veränderung oder Einstellung der Sperrwirkung dadurch erreicht, dass die in der in Fig. 1 und 2 gezeigte Ausführung eines Kegelrad-Differenzials (1) beidseitig des Kegelrad-Getriebes (2) je zwei Abtriebsachsen-koaxial angeordnete Reibscheibenpaarungen (5) mit je einer außen-fixierbaren Scheibe (6) und einer innen-fixierte Scheibe (7) aufweisen, wobei jede außen-fixierbare Scheibe (6) an ihrem Umfang Mulden-artige Einbuchtungen (8) besitzt, siehe auch Fig. 6.

In den Zeichnungen Fig. 3, 4 und 10 ist eine Variante der erfindungsgemäßen Lösung mit drei im Antriebsgehäuse (3) verankerten Rotationsachsen-parallelen drehbaren Schaltwellen (9) dargestellt. Diese Schaltwellen (9) stehen in einem etwa gleichen Winkelabstand zueinander und sind im gleichen radialen Abstand zur Rotationsachse (34) der Abtriebsachsen (21,22) positioniert. Sie laufen durch die Mulden-artigen Einbuchtungen (8) aller außen-fixierbaren Scheiben (6) hindurch, so dass sie gleichzeitig als äußere Führung und Zentrierung der außen fixierbaren Scheiben (6) dienen können.

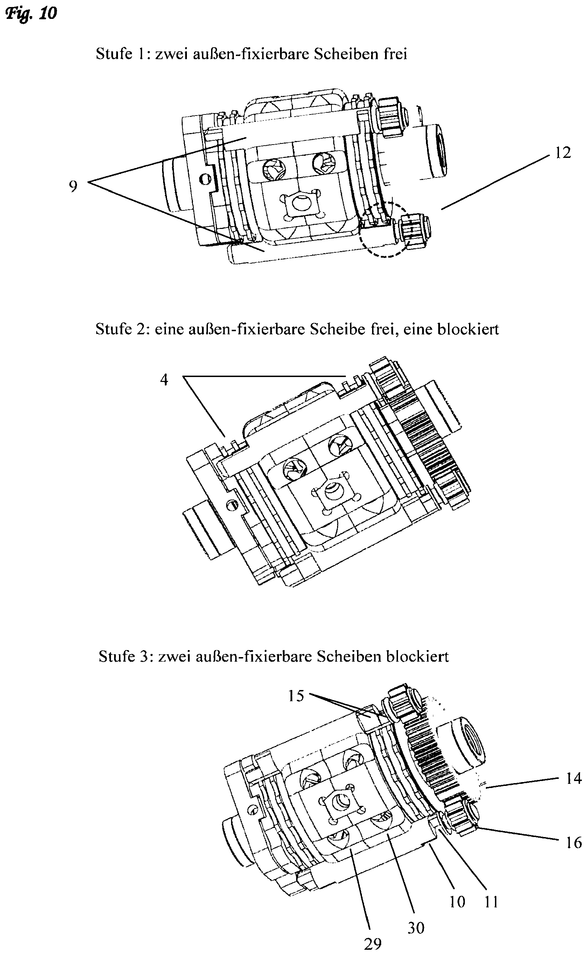

Jeweils auf Höhe der außen-fixierbaren Scheiben (6) besitzen die Schaltwellen (9) eine sektorale Aussparung (10, 11) mit einem verbliebenen Querschnitt (15). Die Größe, Form und Winkellage der sektoralen Aussparungen (10, 11) sind so gewählt, dass in Abhängigkeit vom synchron für alle drei Schaltwellen (9) gleich eingestellten Drehwinkel zumindest drei verschiedene Reibscheiben-Konstellationen (4) gewählt werden können, siehe hierzu Fig. 10. Diese drei verschiedenen Einstellungen im gezeigten Beispiel sind: keine, eine oder parallel, das heißt zusammen, zwei außen-fixierbare Scheiben (6) werden gegenüber einer beziehungsweise zwei benachbarten innen-fixierten Scheiben (7) auf beiden Seiten des Kegelrad-Getriebes (2) blockiert. Das bedeutet: auf beiden Seiten des Kegelrad- Getriebes (2) keine Reibscheibenpaarung (5) frei, eine Reibscheibenpaarung (5) frei oder beide Reibscheibenpaarungen (5) frei. Bei anders konfigurierten sektoralen Aussparungen (10, 11) kann durch einzelne oder gruppenweise Blockierung der außen fixierbaren Scheiben (6) ein einseitiges, beidseitig gleichsinniges oder beidseitig gegensinniges oder abgestuftes Zu- und Abschalten der Sperrwirkung auf die Abtriebsachsen (21, 22) des Kegelrad-Differenzials (1) erreicht werden. Somit sind also auch asymmetrische Reibscheiben-Konstellationen (4) schaltbar, bei denen auf einer Seite des Kegelrad-Getriebes (2) mehr Reibscheiben-Paarungen (5) aktiviert werden als auf der anderen Seite.

In Fig. 7 sind beispielhaft Profile der verbliebenen Querschnitte (15) dargestellt, deren jeweilige Form von der Anzahl der vorgesehenen Schaltstellungen und der Reibscheiben-Konstellationen (4) abhängig ist. Benachbarte Profile können demnach auch unterschiedlich geformt sein.

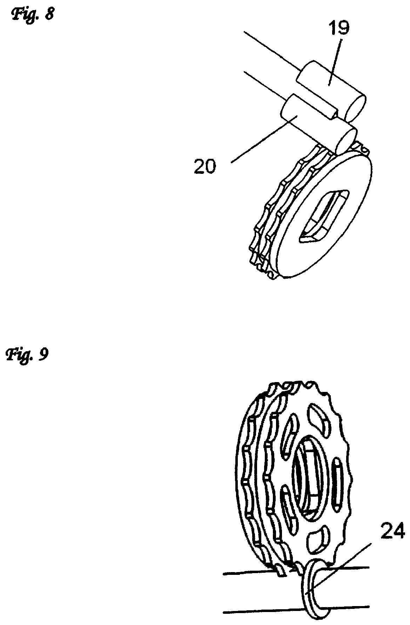

In Fig. 8 wird eine Variante der Erfindung gezeigt, bei der die Schaltwellen (9) außerhalb des Umfangs der außen-fixierbaren Scheiben (6) verlaufen und jeweils auf der Position der zu blockierenden außen-fixierbaren Scheiben (6) mit deren Mulden-artigen Einbuchtungen (8) eine nockenartige Erhebung (19, 20) besitzen. Diese dienen ebenso wie die zuvor beschriebenen verbliebenen Querschnitte (15) der sektoralen Aussparungen (10, 11) dem Blockieren der außen-fixierbaren Scheiben (6) der Reibscheibenpaarungen (5) bei bestimmter Drehstellung der Schaltwellen (9).

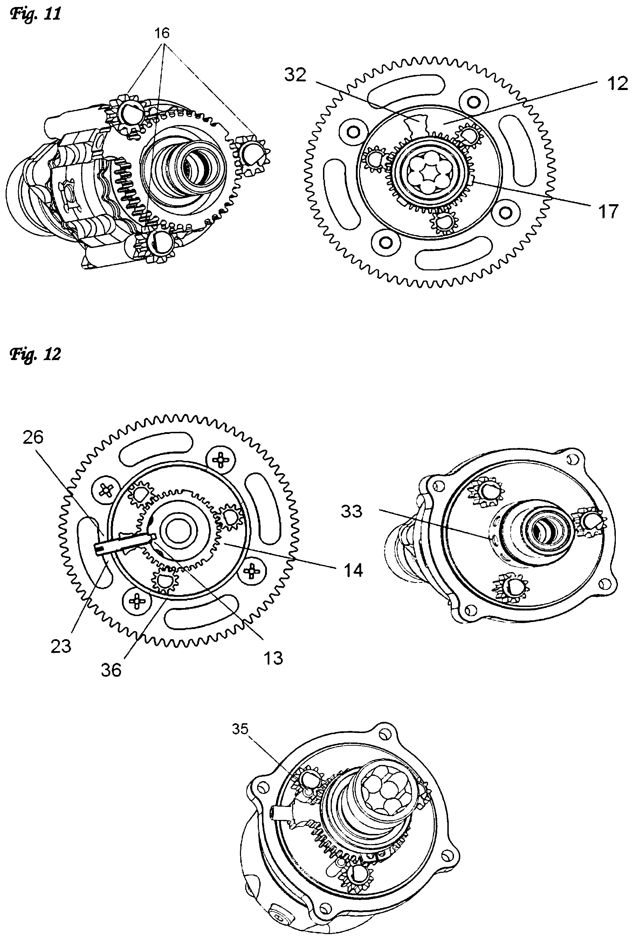

In den Außenbereich des Antriebsgehäuses (3) sind bei einem in Fig. 11 gezeigten Ausführungsbeispiel der Erfindung drei Schaltwellen (9) herausgeführt, an deren Enden sich Zahnräder (16) gleicher Art und Größe befinden, die durch ein zentrales, entsprechend verzahntes Sonnenrad (17) als Koppelelement (14) zum synchronen Drehen der Schaltwellen (9) verbunden sind. Alternativ zu dem Zentralzahnrad, dem Sonnenrad (17), werden auch andere technische Mittel als Koppelelement (14) vorgeschlagen, wie zum Beispiel ein umlaufender Zahnriemen oder eine umlaufende Kette. Das Blockieren einer außen-fixierbaren Scheibe (6) erfolgt durch Eindrehen des verbliebenen Querschnitts (15) einer sektoralen Aussparung (10, 11) jeder Schaltwelle (9) in eine von deren Mulden-artigen Einbuchtungen (8), siehe hierzu auch Fig. 3 und 6. Der Abstand von Mulden-artigen Einbuchtungen (8) ist so gewählt, dass das Eindrehen auch bei mehreren gleichzeitig zu blockierenden außen-fixierbaren Scheiben (6) in der Regel direkt möglich ist. Für den Fall ungünstig nicht fluchtend stehender außen-fixierbarer Scheiben (6), die zuvor frei drehend waren, ist die Form und Dimensionierung der verbliebenen Querschnitte (15) der sektoralen Aussparungen (10, 11) oder der nockenartigen Erhebungen (19, 20) so gestaltet, dass spätestens durch ein Hin- und Her-Drehens der Schaltwelle(n) (9) das Blockieren der entsprechenden außen-fixierbaren Scheiben (6) erreicht wird. Beim Blockier-Vorgang kann ein Bewegen der Abtriebsachen (21, 22) unterstützend wirken.

Erfindungsgemäß wird eine Variante vorgeschlagen, bei der die bereits beschriebenen Schaltwellen (9) axial verschiebbar sind, so dass verbliebene Querschnitte (15) oder Erhebungen (19, 20) so ausgeführter Schaltwellen Rotationsachsen-parallel in Mulden-artige Einbuchtungen (8) der außen-fixierbaren Scheiben (6) zum Blockieren eingeschoben werden können, wobei durch angeschrägte oder gerundete Kanten entsprechender sektoralen Aussparungen oder Erhebungen das Einschieben in die Mulden-artigen Einbuchtungen (8) begünstigt wird. Zum Weg-gleichen Verschieben von verschiebbaren Schaltwellen ist ein entsprechender Schubmechanismus erforderlich, zum Beispiel in Form eines alle Schaltwellen-Enden greifenden Schubrings, der mittels eines am Antriebsgehäuse (3) abgestützten drehbaren Rampenrings betätigt wird.

Eine weitere Möglichkeit zur Nutzung der erfindungsgemäßen Konstruktion eines Kegelrad-Differenzials (1) besteht darin, die dreh- oder verschiebbaren Schaltwellen (9) nicht nur zum Blockieren außen-fixierbarer Scheiben (6) zu verwenden, sondern durch sie auf diese im blockierten Zustand zusätzlich einen axialen Druck aufzubauen, um die statische Grundsperrung in Stufen oder stufenlos zu variieren. Mindestens zwei synchron dreh- oder verschiebbare Schaltwellen besitzen direkt neben einer oder mehreren sektoralen Aussparungen (10, 11) oder Erhebungen (19, 20) Kragen-Ringe (24), die beim Weiterdrehen nach Erreichen der Blockier-Stellung wie Schrauben eine überlagerte Axialbewegung synchron ausüben beziehungsweise beim Weiterschieben Druck auf die entsprechenden außen-fixierbare Scheiben (6) aufbauen, siehe hierzu Fig. 9.

An dem für einen Drehmechanismus (12) vorgeschlagenen Sonnenrad (17) ist in Fig. 11 ein Ansatzstück (32) am Sonnenrad (17) als Bestandteil des Betätigungsmechanismus (23) vorgesehen. Das Ansatzstück (32) weist eine radiale Gewindebohrung auf, die ein Schraubelement (25) aufnimmt, mit dem die Stellung des Sonnenrads (17) und damit die Schaltstellung der Schaltwellen (9) dadurch fixiert werden kann, dass das eingeschraubte Ende eines Schraubelements (25) in eine von drei Vertiefungen in einem stirnseitigen zylindrischen Absatz (33) des Antriebsgehäuses (3), die zu einer gewünschten Schaltstellung korreliert, eingedreht wird.

In anderen Ausführungsvarianten der Erfindung werden die Schaltstellungen der Schaltwelle(n) (9) durch Endanschläge (35), wie sie in Fig. 12 zu sehen sind, und/oder Rast-Mechanismen an den Schaltwellen (9), am Koppelelement (14) oder an einer angeschlossenen Betätigungseinrichtung (23) definiert gehalten oder/und durch Steck-, Klemm- oder Schraub-Elemente (25) gesichert. Ein solches Fixierelement (13) ist zum Beispiel ein in die radiale Gewindebohrung des Ansatzstücks (32) eingeschraubter Stift oder Bolzen, welcher durch Bohrungen eines das Ansatzstück (32) des Sonnenrades (17) Kreisbogen-förmig umgebenden stirnseitigen Kragens oder Gehäuse-Teils des Antriebsgehäuses (3) eingeführt wird. Auch federbelastet in Raststellen einrastende Bauelemente zur Fixierung der Schaltstellungen der Schaltwellen (9) sind diesbezüglich mögliche Ausprägungen der Erfindung.

Fig. 1 und 12 zeigen eine bevorzugte konstruktive Variante, bei der der Drehmechanismus (12) samt Zahnrädern (16) und Sonnenrad (17) durch einen schützenden Gehäusedeckel (36) des Antriebsgehäuses (3) abgedeckt ist. Dieser Gehäusedeckel (36) wird in einer beispielhaften Weiterbildung der Erfindung koaxial zur Drehachse des Sonnenrades (17) drehbar gelagert oder geführt. Durch das Schraubelement (25), das in diesem Beispiel auch als Übertragungsmechanismus (26) vom in diesem Fall innen liegenden Drehmechanismus (12) in den für eine Bedienperson zugänglichen Außenbereich des Antriebsgehäuses (3) wird der Gehäusedeckel (36) im Bereich des Ansatzstücks (31) mit dem Sonnenrad winkelfest verbunden, so dass er als komfortabel bedienbares Stellrad als Teil des Drehmechanismus (12) genutzt werden kann. Mit dem Einschrauben oder Festziehen des Schraubelements (25) wird dann die gewählte Schaltstellung fixiert.

Für andere Anwendungs-Umgebungen oder -Bedingungen, bei denen der Schaltvorgang durch räumlich vom Kegelrad-Differenzial (1) entferntes Betätigen des Drehmechanismus (12) oder Schubmechanismus manuell oder mit Fremdenergie erfolgen soll, kann eine Übertragungs-Vorrichtung angeschlossen werden, zum Beispiel in Form eines Bowdenzugs oder einer Hebel-Konstellation für manuelle Betätigung oder in Form elektromagnetisch, elektromotorisch oder hydraulisch funktionierender Aktoren.

### Bezugszeichen-Liste:

- 1: Kegelrad-Differenzial
- 2: Kegelrad-Getriebe
- 3: Antriebsgehäuse
- 4: Reibscheiben-Konstellation
- 5: Reibscheibenpaarung
- 6: außen-fixierbare Scheibe
- 7: innen fixierte Scheibe
- 8: Mulden-artige Einbuchtung
- 9: Schaltwelle
- 10, 11: sektorale Aussparung
- 12: Drehmechanismus
- 13: Fixiereinrichtung
- 14: Koppelelement
- 15: verbliebener Querschnitt
- 16: Zahnrad
- 17: Sonnenrad
- 19, 20: Erhebung
- 21,22: Abtriebsachse
- 23: Betätigungseinrichtung
- 24: Kragenring
- 25: Schraubelement
- 26: Übertragungsmechanismus
- 27, 28: Kegelzahnrad
- 29, 30: Korbhälfte
- 31: Rampenstein
- 32: Ansatzstück
- 33: zylindrischer Absatz
- 34: Rotationsachse
- 35: Endanschlag
- 36: Gehäusedeckel

## Patentansprüche

1. Kegelrad-Differenzial (1) als Achs- oder Zentraldifferenzial für die Anwendung bei Elektro- oder Verbrennungsmotor- oder Hybrid-betriebenen Fahrzeugen, insbesondere Modellsport- oder Renn-Fahrzeugen, bei dem das Antriebsmoment über ein mit dem Kegelrad-Getriebe (2) verbundenes Antriebsgehäuse (3) übertragen wird und bei dem eine begrenzte oder völlige Sperrwirkung auf die Abtriebsachsen (21, 22) durch statisch mittels Feder- oder Klemmkräften oder/und dynamisch mittels Rampen-Konstruktionen erzeugte Friktionsmomente in koaxialen, einseitig oder beidseitig des zentralen Kegelradgetriebes (2) befindlichen Reibscheiben-Konstellationen (4) erreicht wird, wobei die Sperrwirkung durch Veränderungen in der Reibscheiben-Konstellation (4) einstellbar ist, **dadurch gekennzeichnet, dass** die Reibscheiben-Konstellationen (4) jeweils aus einer oder mehreren Reibscheibenpaarungen (5) mit jeweils mindestens einer außen-fixierbaren Scheibe (6) und einer innen-fixierten Scheibe (7) bestehen, bei denen die jeweils außen-fixierbare(n) Scheibe(n) (6) an ihrem Umfang Mulden-artige Einbuchtungen (8) besitzen, wobei eine oder mehrere im Antriebsgehäuse (3) verankerte Rotationsachsen-parallele dreh- oder verschiebbare Schaltwellen (9) bestehen, welche entweder durch die Mulden-artigen Einbuchtungen (8) der außen-fixierbaren Scheibe(n) (6) hindurch verlaufen und jeweils an deren axialer Position eine sektorale Aussparung (10, 11) mit einem verbliebenen Querschnitt (15) der Schaltwelle (9) besitzen, oder welche außerhalb des Umfangs der außen fixierbaren Scheiben (6) verlaufen und jeweils im Bereich der Mulden-artigen Einbuchtungen (8) eine oder mehrere Erhebungen (19, 20) besitzen, wobei die Größe und Winkellage der sektoralen Aussparungen (10, 11) oder Erhebungen (19, 20) so gestaltet sind, dass je nach Drehwinkel oder Schubstellung der Schaltwelle(n) (9) keine, eine oder parallel mehrere außen-fixierbare Scheiben (6) gegenüber den innen-fixierten Scheiben (7) in diesem Bereich blockiert sind, und welche ferner durch einen im Inneren oder Außenbereich des Antriebsgehäuses angeordneten Drehmechanismus (12) oder einen Schubmechanismus und eine angeschlossene Betätigungseinrichtung (23) in die gewünschte Schaltstellung gebracht und dort durch eine Fixiereinrichtung (13) gesichert wird/werden, wobei im Falle mehrerer, um die außen-fixierbaren Scheiben (6) herum angeordneten Schaltwellen (9) durch ein Koppelelement (14) deren gleich-winklig parallele Verdrehung oder deren gleicher Vorschubweg bewirkt wird.

2. Kegelrad-Differenzial (1) gemäß Anspruch 1, **dadurch gekennzeichnet, dass** mindestens 3 Schaltwellen in etwa gleichem Winkelabstand zueinander so um die außen-fixierbaren Scheiben (6) herum angeordnet sind, dass sie gleichzeitig als äußere Führung und Zentrierung der außen-fixierbaren Scheiben (6) dienen.

3. Kegelrad-Differenzial (1) gemäß Anspruch 1 oder 2, **dadurch gekennzeichnet, dass** Abstand, Form und Tiefe der Mulden-artigen Einbuchtungen (8) so gewählt ist, dass direkt oder mittels eines Hin- und Her-Drehens oder Hin- und Her-Verschiebens der Schaltwelle(n) (9) der verbliebene Querschnitt (15) einer sektoralen Aussparung (10, 11) oder eine Erhebung (19, 20) radial beziehungsweise axial in eine Mulden-artige Einbuchtung (8) einfahren kann, auch wenn die außen-fixierbaren Scheiben (6) zunächst nicht fluchtend zueinander stehen.

4. Kegelrad-Differenzial (1) gemäß Anspruch 1, 2 oder 3, **dadurch gekennzeichnet, dass** eine drehbare Schaltwelle (9) innerhalb deren Gesamtdrehbereichs von bis zu 360° je nach Form und/oder Winkellage der sektoralen Aussparungen (10, 11) oder Erhebungen (19. 20) zwei oder mehr Schaltstellungen einnehmen kann.

5. Kegelrad-Differenzial (1) gemäß einem der Ansprüche 1 bis 4, **dadurch gekennzeichnet, dass** je außen fixierbarer Scheibe (6) die Form und/oder Winkellage der sektoralen Aussparungen (10,11) oder Erhebungen (19, 20) der Schaltwelle(n) (9) jeweils auf der Höhe der außen fixierbaren Scheiben (6) so gewählt werden können, dass durch einzelne oder gruppenweise Blockierung der außen fixierbaren Scheiben (6) ein einseitiges, beidseitig gleichsinniges oder beidseitig gegensinniges oder abgestuftes Zu- und Abschalten der Sperrwirkung auf die Abtriebsachsen (21, 22) des Kegelrad-Differenzials (1) erreicht wird.

6. Kegelrad-Differenzial (1) gemäß einem der Ansprüche 1 bis 5, **dadurch gekennzeichnet, dass** mindestens zwei synchron dreh- oder verschiebbaren Schaltwellen direkt neben einer oder mehreren sektoralen Aussparungen (10, 11) oder Erhebungen (19, 20) Kragen-Ringe (24) aufweisen, die beim Weiterdrehen oder Weiterschieben der Schaltwellen nach Erreichen der Blockier-Stellung Druckkräfte auf die entsprechenden außen-fixierbaren Scheiben (6) aufbauen, so dass eine Veränderung der statischen Friktionsmomente bewirkt wird, wobei drehbare Schaltwellen (9) beim Weiterdrehen wie Schrauben eine überlagerte Axialbewegung ausüben.

7. Kegelrad-Differenzial (1) gemäß einem der Ansprüche 1 bis 6, **dadurch gekennzeichnet, dass** der Drehmechanismus (12) zur Drehung der im Antriebsgehäuse (3) gelagerten Schaltwelle(n) (9) aus am jeweils gleichen Ende einer Schaltwelle (9) außerhalb des Antriebsgehäuses (3) befindlichen Zahnrad (16) besteht, wobei im Falle mehrerer Schaltwellen (9) alle Zahnräder (16) gleich sind und durch ein zentrales, passend verzahntes Sonnenrad (17) als Koppelelement (14) synchron gedreht werden.

8. Kegelrad-Differenzial (1) gemäß einem der Ansprüche 1 bis 7, **dadurch gekennzeichnet, dass** die gleich-winklig parallele Verdrehung mehrerer Schaltwellen (9) durch einen umlaufenden Zahnriemen als Koppelelement (14) erfolgt, der im Eingriff mit dem Zahnrad (16) einer jeden Schaltwelle (9) steht.

9. Kegelrad-Differenzial (1) gemäß einem der Ansprüche 1 bis 8, **dadurch gekennzeichnet, dass** die Fixiereinrichtung (13) der Schaltstellungen so gebaut ist, dass die Schaltstellungen der Schaltwelle(n) (9) durch Endanschläge und/oder Rast-Mechanismen an den Schaltwellen (9), am Koppelelement (14) oder an einer angeschlossenen Betätigungseinrichtung (23) definiert gehalten oder/und durch Steck-, Klemm- oder Schraub-Elemente (25) gesichert werden.

10. Kegelrad-Differenzial (1) gemäß einem der Ansprüche 1 bis 9, **dadurch gekennzeichnet, dass** die Betätigungseinrichtung (23) an einer Schaltwelle (9) oder am Koppelelement (14) direkt oder durch einen Übertragungs-Mechanismus (26), zum Beispiel einen Bowdenzug oder eine Hebel-Konstellation, mit dem Drehmechanismus (12) oder Schubmechanismus verbunden ist und manuell oder elektromagnetisch, elektromotorisch oder hydraulisch bedient wird.
